# DEMANDE DE BREVET EUROPEEN

(11) **EP 2 952 294 A1**
(43) Date de publication de la demande: **09.12.2015**
(21) Numéro de dépôt: 15170710.6
(22) Date de dépôt: 04.06.2015
(51) Int. Cl.: B24B 55/10, A47L 7/00, B25F 5/00, B23Q 11/00

(54) **DISPOSITIF DE REFROIDISSEMENT D'UN CIRCUIT DE COMMANDE D'UN MOTEUR ÉLECTRIQUE D'UNE MACHINE ÉLECTROPORTATIVE, ET MACHINE ÉLECTROPORTATIVE ÉQUIPÉE D'UN TEL DISPOSITIF DE REFROIDISSEMENT PAR AIR D'ASPIRATION POLLUÉ**

(30) Priorité: 05.06.2014 FR 1455140
(71) Demandeur: M.B.H. Developpement, 42640 Saint Romain la Motte (FR)
(72) Inventeur: BOTTAZZI, Marc, 42120 Saint Vincent de Boisset (FR)
(74) Mandataire: Cabinet Laurent & Charras

(57) **Abrégé**

Dispositif de refroidissement (1) d'un circuit de commande (2) comprenant un variateur apte à piloter un moteur électrique d'une machine électroportative (3) connectée à un bloc aspirateur (4) par l'intermédiaire d'une conduite d'aspiration (5).

Selon l'invention, le dispositif de refroidissement (1) se présente sous la forme d'un boîtier (6) étanche dans lequel s'étend le circuit de commande (2), ledit boîtier (6) comprend une entrée d'air (7) et une sortie d'air (8) reliées intérieurement par un tube de refroidissement (10), l'entrée d'air (7) et la sortie d'air (8) comprennent chacune des moyens pour leur connexion avec la conduite d'aspiration (5), de manière à ce que l'air aspiré par le bloc aspirateur (4) circule par l'intérieur du boîtier (6) et permette le refroidissement du circuit de commande (2), ledit circuit de commande (2) comprenant un câble (13) étanche d'alimentation secteur, et au moins un câble (13) étanche de connexion à la machine électroportative (3).

## Description

### DOMAINE TECHNIQUE

La présente invention se rapporte au secteur technique des machines et appareils électroportatifs connectés à des blocs aspirateurs, et qui sont destinés à l'exécution de travaux tels que ponçage, nettoyage, surfaçage, meulage, forage sur tout type de parois ou surfaces à traiter ou rénover.

La présente invention concerne plus particulièrement un dispositif de refroidissement d'un circuit de commande d'un moteur électrique d'une machine électroportative, ainsi qu'une machine électroportative équipée d'un tel dispositif de refroidissement et destinée à être connectée à un bloc aspirateur.

### ETAT ANTERIEUR DE LA TECHNIQUE

Il est connu de l'état de la technique des machines électroportatives, par exemple à hautes fréquences, telles que des ponceuses à bras, connectées à des blocs aspirateurs pour effectuer des travaux tels que ponçage, meulage, etc..

Ces machines électroportatives comprennent, d'une manière générale, au moins :
- une partie moteur comportant un carter dans lequel est positionné un moteur électrique à hautes fréquences, et apte à entrainer une partie tête active recevant un outil tel qu'un outil de meulage, ponçage ou similaire, et ;
- une conduite d'aspiration destinée à être connectée à un bloc aspirateur.

Afin d'assurer le refroidissement du moteur électrique, et telle que décrit dans la demande de brevet français n° 2 979 562 au nom du Demandeur, la conduite d'aspiration débouche dans le carter de la partie moteur de telle manière que l'air aspiré circule autour dudit moteur électrique pour le refroidir.

Cette solution permet de refroidir d'une manière optimale le moteur électrique de la machine électroportative.

Le moteur électrique est assujetti à un circuit de commande. Dans l'état actuel de la technique, il est connu d'intégrer le circuit de commande directement dans le bloc aspirateur, et d'une manière telle qu'il est refroidit par le flux d'air aspiré à l'intérieur dudit bloc aspirateur.

Cette solution permet de refroidir d'une manière optimale le circuit de commande du moteur électrique d'une machine électroportative, lequel intègre par exemple un variateur de puissance.

De plus, dans certaines applications, par exemple dans des applications de désamiantage, il est imposé par la réglementation en vigueur, de nettoyer à l'eau et en fin de travaux, la machine électroportative pour éliminer tous résidus issus de l'opération de ponçage, meulage ou similaire réalisée. Une telle opération de nettoyage doit être relativement rapide pour ne pas trop être contraignante. En pratique, une solution consiste à projeter un puissant jet d'eau sur toute la surface de la machine électroportative.

Le fait que le circuit de commande du moteur électrique de la machine électroportative soit délocalisé au niveau du bloc aspirateur, permet de pouvoir respecter la réglementation en vigueur sans risque de détérioration pour ledit circuit de commande. En effet, lorsqu'il s'agit de réaliser des opérations de ponçage, meulage, etc. dans une pièce, la machine électroportative est connectée au bloc aspirateur par l'intermédiaire d'une conduite d'aspiration et ledit bloc aspirateur est disposé hors de la pièce.

Le bloc aspirateur n'est donc pas exposé aux résidus issus des travaux de ponçage, meulage, etc., et il n'est pas nécessaire de le nettoyer avec un puissant jet d'eau. La machine électroportative peut, quant à elle, être nettoyée avec ledit jet d'eau sans craindre de détériorer le circuit de commande du moteur électrique lorsque cette machine est entrainée par un moteur à hautes fréquences ou « Brushless », c'est-à-dire sans balai, qui sont étanches. Ce nettoyage n'est pas possible lorsque la machine est entrainée par un moteur universel.

La solution de l'état actuel de la technique permet de faciliter le nettoyage de la machine électroportative, tout en permettant le refroidissement du circuit de commande du moteur électrique de ladite machine électroportative.

Cependant, une telle solution présente l'inconvénient que le bloc aspirateur doit être adapté au type de machine électroportative utilisé. Il est, en effet, impossible d'utiliser un bloc aspirateur standard, le bloc aspirateur utilisé doit être spécifique à la machine électroportative concernée, et doit notamment intégrer le circuit de commande de ladite machine électroportative.

### EXPOSE DE L'INVENTION

L'un des buts de l'invention est donc de remédier au moins à l'inconvénient précité en proposant un dispositif qui permette, d'une part, de refroidir un circuit de commande d'un moteur électrique d'une machine électroportative, tout en permettant le nettoyage à l'eau de ladite machine sans risque pour ledit circuit de commande, et d'autre part, de pouvoir utiliser la machine électroportative avec tout type de bloc aspirateur.

Un autre objectif de l'invention est de permettre l'utilisation et le branchement de plusieurs machines électroportatives sur le même circuit de commande.

Un autre objectif de l'invention est de fournir un dispositif qui soit de conception simple, sûre et rationnelle.

A cet effet, il a donc été mis au point un dispositif de refroidissement d'un circuit de commande comprenant un variateur apte à piloter un moteur électrique d'une machine électroportative connectée à un bloc aspirateur par l'intermédiaire d'une conduite d'aspiration.

Conformément à l'invention, le dispositif de refroidissement se présente sous la forme d'un boîtier étanche dans lequel s'étend le circuit de commande. Le boîtier étanche comprend notamment une entrée d'air et une sortie d'air, reliées intérieurement par un tube de refroidissement. L'entrée d'air et la sortie d'air comprennent chacune des moyens de connexion d'une conduite d'aspiration. L'entrée d'air et la sortie d'air du boîtier sont destinées à être connectées à la conduite d'aspiration reliant la machine électroportative au bloc aspirateur. Le circuit de commande comprend un câble étanche d'alimentation secteur, et au moins un câble étanche de connexion à la machine électroportative.

En pratique, l'entrée d'air du dispositif de refroidissement est connectée par l'intermédiaire d'une conduite d'aspiration à la machine électroportative, et la sortie d'air est connectée au bloc aspirateur, aussi par l'intermédiaire d'une conduite d'aspiration. Ainsi, lorsque le bloc aspirateur est en marche et aspire de l'air, le flux d'air circulant dans les conduites d'aspiration circule au travers du dispositif de refroidissement et refroidit le circuit de commande de la machine électroportative.

Le dispositif selon l'invention permet donc de refroidir un circuit de commande d'un moteur électrique d'une machine électroportative connectée à un bloc aspirateur, lorsque ledit bloc aspirateur est en fonctionnement.

De plus, le dispositif selon l'invention intègre le circuit de commande du moteur électrique de la machine électroportative. De cette manière, le circuit de commande n'est plus agencé au niveau du bloc aspirateur. Un bloc aspirateur standard peut donc être utilisé. En pratique, le bloc aspirateur est notamment connecté au circuit de commande par l'intermédiaire du câble étanche d'alimentation secteur.

Par ailleurs, le dispositif selon l'invention est étanche. Ainsi, lorsque les opérations de ponçage, meulage etc. effectuées par la machine électroportative sont terminées, ladite machine, ainsi que le dispositif de refroidissement, peuvent être nettoyés avec de l'eau, et plus particulièrement avec un puissant jet d'eau, sans risque pour le circuit de commande de la machine.

Le dispositif de refroidissement selon l'invention permet donc de respecter, sans risques, la réglementation en vigueur lorsque celle-ci impose le nettoyage des machines électroportatives après leur travail de ponçage, meulage, etc..

Avantageusement, et pour améliorer la dissipation thermique et donc le refroidissement de l'élément à refroidir, le boîtier comprend des agencements aptes à permettre la réception du circuit de commande de manière à ce que celui-ci soit en contact avec le tube de refroidissement.

De préférence, chacun des câbles est assujetti à une fiche de connexion. Lesdites fiches de connexion sont fixées d'une manière étanche au boîtier et sont accessibles par l'extérieur dudit boîtier. Ces fiches de connexion permettent notamment de faciliter la connexion électrique, d'une part, entre la machine électroportative et son circuit de commande, et d'autre part entre la machine électroportative et le bloc aspirateur. Les fiches de connexion permettent également d'assurer une connexion simple et amovible.

La connexion du circuit de commande au bloc aspirateur permet, par exemple, de pouvoir alimenter électriquement le circuit de commande par l'intermédiaire de l'alimentation du bloc aspirateur. Cette caractéristique permet également, par exemple, de mettre en oeuvre un système de démarrage automatique de sorte que, lorsque le moteur de la machine électroportative est mis en marche, le bloc aspirateur est automatiquement actionné et le flux d'aspiration refroidit directement le circuit de commande de la machine électroportative

Avantageusement, le circuit de commande comprend deux câbles de connexion, chacun étant apte à être connecté à une machine électroportative, et chacun étant assujetti à une fiche de connexion fixée au boîtier et accessible par l'extérieur dudit boitier.

Cette caractéristique permet l'utilisation de plusieurs machines électroportatives reliées au même circuit de commande.

Le tube de refroidissement du boîtier peut être réalisé en toute matière appropriée pour dissiper la chaleur, tel qu'un alliage thermiquement conducteur, mais l'aluminium demeure une matière préférée pour une dissipation optimale.

Les moyens de connexion de l'entrée d'air et de la sortie d'air du boîtier permettent de connecter ledit boîtier à des conduites d'aspiration. Ces moyens de connexion sont de tout type approprié tel que par exemple à encliquetage, ou à vissage.

Avantageusement et pour faciliter le transport du boîtier, celui-ci comprend une poignée.

La présente invention concerne également une machine électroportative comprenant un moteur électrique et un circuit de commande comprenant un variateur apte à piloter ledit moteur électrique. La machine comprend une conduite d'aspiration destinée à être connectée à un bloc aspirateur pour réaliser des opérations de ponçage, nettoyage, surfaçage, meulage, forage sur tout type de parois ou surfaces à traiter ou rénover.

Conformément à l'invention, la machine électroportative comprend un dispositif de refroidissement du circuit de commande selon l'une quelconque des caractéristiques précitées. Ledit dispositif de refroidissement est connecté à la conduite d'aspiration, et remplace notamment une portion de celle-ci.

La machine électroportative peut être de tout type sans sortir du cadre de l'invention. Selon une forme de réalisation particulière, la machine électroportative est une ponceuse à bras.

### BREVE DESCRIPTION DES DESSINS

D'autres caractéristiques et avantages de l'invention ressortiront clairement de la description qui en est réalisée ci-après, à titre indicatif et nullement limitatif, en référence aux figures annexées dans lesquelles :
- la figure 1 est une vue schématique en perspective d'une machine électroportative du type ponceuse à bras, équipée d'un dispositif de refroidissement selon l'invention, et connectée à un bloc aspirateur ;
- la figure 2 est une vue schématique en perspective du dispositif de refroidissement selon l'invention ;
- la figure 3 est une vue schématique en coupe longitudinale du dispositif de refroidissement selon l'invention.

### EXPOSE DETAILLE DE L'INVENTION

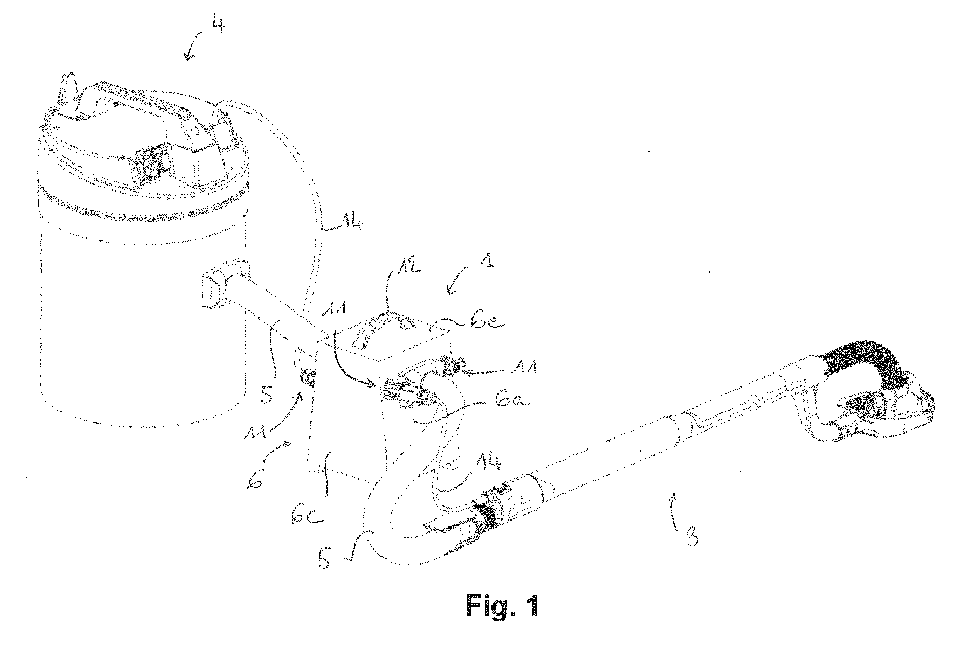

En référence à la figure 1, l'invention concerne un dispositif de refroidissement (1) d'un circuit de commande (2) d'un moteur électrique d'une machine électroportative (3), telle qu'une ponceuse à bras, connectée à un bloc aspirateur (4) par l'intermédiaire d'une conduite d'aspiration (5).

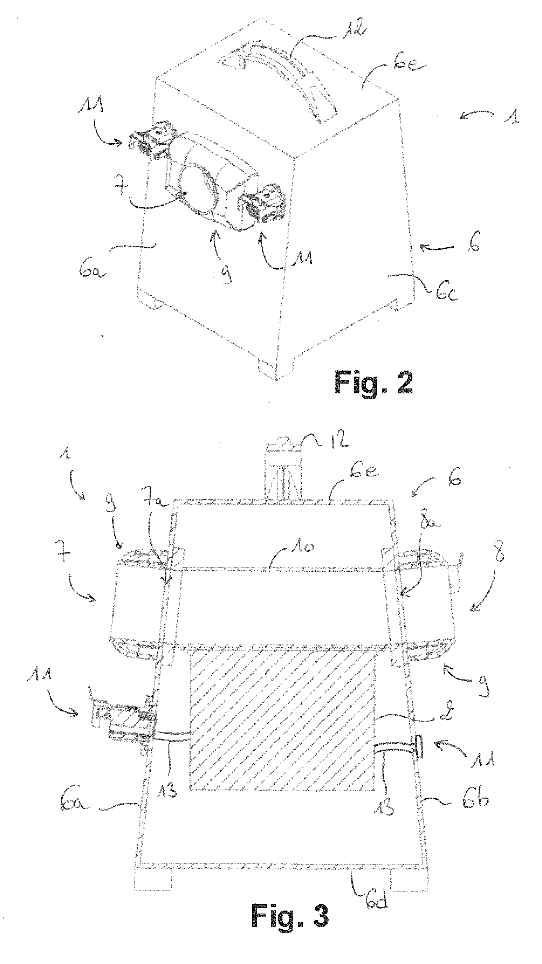

En référence aux figures 2 et 3, le dispositif de refroidissement (1) se présente sous la forme d'un boîtier (6) définissant une paroi de face (6a), une paroi arrière (6b), deux parois latérales (6c), une paroi de fond (6d) et une paroi supérieure (6e). Ces parois (6a, 6b, 6c, 6d, 6e) sont reliées entre elles de manière à former une enceinte étanche à l'eau.

Le boîtier (6) comprend des dimensions adaptées lui permettant de recevoir et de renfermer le circuit de commande (2) de la machine électroportative (3).

Le boîtier (6) comprend une entrée d'air (7) et une sortie d'air (8), par exemple ménagées respectivement sur la paroi de face (6a) et sur la paroi arrière (6b) dudit boîtier (6).

L'entrée d'air (7) et la sortie d'air (8) se présentent sous la forme d'orifices circulaires (7a, 8a) ménagés dans l'épaisseur dudit boîtier (6). L'entrée d'air (7) et la sortie d'air (8) comprennent des moyens de connexion (9) d'une conduite d'aspiration (5) pour faire circuler un flux d'air à l'intérieur du boîtier (6). Le dispositif de refroidissement (1) est destiné à être installé sur la conduite d'aspiration (5), entre la machine électroportative (3) et le bloc aspirateur (4). En d'autres termes, le dispositif de refroidissement (1) remplace une portion de ladite conduite d'aspiration (5).

En pratique, et en référence à la figure 1, l'entrée d'air (7) du boîtier (6) est connectée par l'intermédiaire d'une conduite d'aspiration (5) à la machine électroportative (3). La sortie d'air (8) du boîtier (6) est connectée au bloc aspirateur (4), aussi par l'intermédiaire d'une conduite d'aspiration (5). Ainsi, lorsque le bloc aspirateur (4) est en marche, un flux d'air circule à partir de la machine électroportative (3), jusqu'au bloc aspirateur (4) en passant par l'intérieur du dispositif de refroidissement (1).

Le boîtier (6) est apte à recevoir et à renfermer le circuit de commande (2) de la machine électroportative (3). Ainsi, lorsque le bloc aspirateur (4) est en marche, le flux d'air traverse le dispositif de refroidissement (1) et refroidit ledit circuit de commande (2).

Les moyens de connexion (9) sont de tout type approprié, par exemple du type à encliquetage, et sont destinés à coopérer avec des moyens complémentaires (non représentés) agencés une extrémité de la conduite d'aspiration (5). Bien entendu, les moyens de connexion (9) permettent d'effectuer une connexion étanche à l'air et à l'eau entre la conduite d'aspiration (5) et le boîtier (6).

A l'intérieur du boîtier (6), l'entrée d'air (7) et la sortie d'air (8) sont reliées par un tube de refroidissement (10), de préférence en aluminium. Le flux d'air aspiré par le bloc aspirateur (4) comprend tous les résidus issus de l'opération de ponçage, meulage, etc. correspondante. Ainsi, le tube de refroidissement (10) permet de guider le flux d'air à l'intérieur du boîtier (6) sans que ledit flux d'air pollué ne soit en contact avec le circuit de commande (2) afin d'éviter les risques de détérioration.

Le circuit de commande (2) est reçu à l'intérieur du boîtier (6) de manière à être en contact avec le tube de refroidissement (10) en aluminium. Selon une forme de réalisation particulière, ledit circuit de commande (2) peut être directement fixé sur le tube de refroidissement (10). Le refroidissement du circuit de commande (2) se fait alors par dissipation thermique. La chaleur du circuit de commande (2) est, tout d'abord, transférée au tube de refroidissement (10), et est ensuite transférée au flux d'air circulant jusqu'au bloc aspirateur (4). Cela entraine le refroidissement dudit circuit de commande (2).

Le circuit de commande (2) comprend un câble (13) étanche d'alimentation secteur, et au moins un câble (13) étanche de connexion une machine électroportative (3). Dans la forme de réalisation illustrée, le circuit de commande (2) comprend deux câbles (13) de connexion à des machines électroportatives, pour permettre notamment l'utilisation et le branchement de deux machines électroportatives au même circuit de commande (2). Le boîtier (6) comprend en outre, sur l'une quelconque des parois dudit boîtier (6), des fiches de connexion (11) aptes à être connectées électriquement et d'une manière étanche par l'intermédiaire des câbles (13) au circuit de commande (2). Les fiches de connexion (11) sont apparentes à l'extérieur du boîtier (6) pour permettre la connexion en tant que telle, et permettent, d'une part, de connecter électriquement, et par l'intermédiaire d'un câble électrique approprié (14), la machine électroportative (3) avec son circuit de commande (2), et, d'autre part, de connecter le circuit de commande (2) avec l'alimentation du bloc aspirateur (4).

La connexion électrique entre le circuit de commande (2) et le bloc aspirateur (4) peut permettre la mise en oeuvre d'un système de démarrage automatique de sorte que, lorsque le moteur électrique de la machine électroportative (3) est mis en marche, le bloc aspirateur (4) est automatiquement actionné et le flux d'aspiration refroidit directement le circuit de commande (2) de la machine électroportative (3).

Enfin, une poignée (12) est agencée sur la paroi supérieure (6e) du boîtier (6) de manière à faciliter sa manutention et son transport.

Ainsi, comme il ressort de ce qui précède, l'invention fournit un dispositif (1) qui permet d'isoler d'une manière étanche, et de refroidir le circuit de commande (2) d'une machine électroportative (3) connectée à un bloc aspirateur (4).

Le dispositif (1) selon l'invention permet aussi, outre le refroidissement dudit circuit de commande (2), d'autoriser un nettoyage de la machine électroportative (3) et du boîtier (6) en fin d'opération de ponçage, meulage, etc. pour respecter la réglementation en vigueur. Le dispositif (1) autorise cette étape de nettoyage sans risque pour le circuit de commande (2) de ladite machine électroportative (3).

Enfin, le dispositif permet d'intégré le circuit de commande (2) du moteur électrique d'une machine électroportative (3), et donc de permettre l'utilisation d'un bloc aspirateur (4) standard, non nécessairement spécifique au type de machine électroportative (3) utilisé.

## Revendications

1. Dispositif de refroidissement (1) d'un circuit de commande (2) comprenant un variateur apte à piloter un moteur électrique d'une machine électroportative (3) connectée à un bloc aspirateur (4) par l'intermédiaire d'une conduite d'aspiration (5), ***caractérisé* en ce qu'**il se présente sous la forme d'un boîtier (6) étanche dans lequel s'étend le circuit de commande (2), ledit boîtier (6) comprend une entrée d'air (7) et une sortie d'air (8), reliées intérieurement par un tube de refroidissement (10), l'entrée d'air (7) et la sortie d'air (8) comprennent chacune des moyens pour leur connexion avec la conduite d'aspiration (5), de manière à ce que l'air aspiré par le bloc aspirateur (4) circule par l'intérieur du boîtier (6) et permette le refroidissement du circuit de commande (2), ledit circuit de commande (2) comprenant un câble (13) étanche d'alimentation secteur, et au moins un câble (13) étanche de connexion à la machine électroportative (3).

2. Dispositif de refroidissement (1) selon la revendication 1, ***caractérisé* en ce qu'**il comprend des agencements aptes à permettre la réception du circuit de commande (2) en contact avec le tube de refroidissement (10).

3. Dispositif de refroidissement (1) selon l'une des revendications précédentes, ***caractérisé* en ce que** chacun des câbles (13) est assujetti à une fiche de connexion (11), lesdites fiches de connexion (11) sont fixées d'une manière étanche au boîtier (6) et sont accessibles par l'extérieur dudit boîtier (6).

4. Dispositif de refroidissement (1) selon la revendication 3, ***caractérisé* en ce que** le circuit de commande (2) comprend deux câbles (13) de connexion, chacun étant apte à être connecté à une machine électroportative (3), et chacun étant assujetti à une fiche de connexion (11) fixée au boîtier (6) et accessible par l'extérieur dudit boitier (6).

5. Dispositif de refroidissement (1) selon l'une des revendications précédentes, ***caractérisé* en ce que** le tube de refroidissement (10) est réalisé en alliage thermiquement conducteur.

6. Dispositif de refroidissement (1) selon l'une quelconque des revendications précédentes, ***caractérisé* en ce que** les moyens de connexion (9) sont du type à encliquetage, ou à vissage.

7. Dispositif de refroidissement (1) selon l'une quelconque des revendications précédentes, ***caractérisé* en ce que** le boîtier (6) comprend une poignée (12).

8. Machine électroportative (3) comprenant un moteur électrique et un circuit de commande (2) comprenant un variateur apte à piloter ledit moteur électrique, la machine comprenant une conduite d'aspiration (5) destinée à être connectée à un bloc aspirateur (4) pour réaliser des opérations de ponçage, nettoyage, surfaçage, meulage, forage sur tout type de parois ou surfaces à traiter ou rénover, ***caractérisée* en ce qu'**elle comprend un dispositif de refroidissement (1) dudit circuit de commande (2) selon l'une des revendications 1 à 7, ledit dispositif de refroidissement (1) étant connecté à la conduite d'aspiration (5).

9. Machine électroportative (3) selon la revendication 9, ***caractérisée* en ce qu'**elle est une ponceuse à bras.
